# EUROPÄISCHE PATENTSCHRIFT

(11) **EP 3 744 762 B1**
(45) Veröffentlichungstag und Bekanntmachung des Hinweises auf die Patenterteilung: **04.12.2024**
(21) Anmeldenummer: 20174346.5
(22) Anmeldetag: 13.05.2020
(51) Int. Cl.: C08G 77/46, C08G 77/14

(54) **VERFAHREN ZUR HERSTELLUNG VON POLYOXYALKYLEN POLYSILOXAN BLOCKPOLYMERISATEN**
METHOD FOR THE PREPARATION OF POLYOXYALKYLENE POLYSILOXANE BLOCK POLYMERISATES
PROCÉDÉ DE FABRICATION DE POLYMÈRES SÉQUENCÉS DE POLYOXYALKYLÈNE POLYSILOXANE

(30) Priorität: 28.05.2019 EP 19176879
(43) Veröffentlichungstag der Anmeldung: 02.12.2020
(73) Patentinhaber: Evonik Operations GmbH, 45128 Essen (DE)
(72) Erfinder: Knott, Wilfried, 45355 Essen (DE); Dudzik, Horst, 45326 Essen (DE); Henning, Frauke, 45259 Essen (DE); Favresse, Philippe, 40880 Ratingen (DE)
(74) Vertreter: Evonik Patent Association

(56) Entgegenhaltungen:
- EP-A1- 3 438 158

## Beschreibung

Die Erfindung betrifft ein Verfahren zu Herstellung von SiOC-verknüpften, linearen Polydimethylsiloxan-Polyoxyalkylen-Blockcopolymeren des Strukturtyps C-B-(AB)ₐ-C1 sowie deren Verwendung als Bestandteile in grenzflächenaktiven Substanzen, wie in PU-Schaumstabilisatoren, Entschäumern, Entlüftern, Emulgatoren, Dismulgatoren und Lack- und Verlaufsadditiven.

Die Begriffe "Siloxane" und "Polysiloxane" werden als Synonyme in der vorliegenden Erfindung verwendet.

Der Begriff Entschäumer umfasst im vorliegenden Fall sowohl Produkte als auch Formulierungen, die Schaum verhindern, als auch solche, die Schaum zerstören sowie eine Entlüftung ermöglichen. In der Praxis sind die Übergänge zwischen diesen Produkteigenschaften fließend, so dass hier der gemeinsame Sammelbegriff Entschäumer verwendet wird.

In vielen technischen Verfahren, insbesondere, wenn in wässrigen Medien gearbeitet wird, ist es notwendig, die unerwünschte Bildung von Schaum während der Herstellungs- oder Verarbeitungsprozesse zurückzudrängen oder ganz zu unterbinden, da Schaum bzw. Schaumkronen, die sich bei Rühr- und Dispergiervorgängen oder in den Gebinden während des Abfüllvorganges bilden, die Produktionszeiten verlängern oder aber das Effektivvolumen der Anlage vermindern bzw. deren korrekte Arbeit sogar verhindern können, indem ein Überlaufen der Formulierung aus dem Mischkessel nicht vermieden werden kann und beim Applizieren dieser eine fehlende Farbübertragung unvermeidlich ist.

Dies kann erreicht werden, indem man Entschäumer hinzugibt, die schon bei sehr geringen Einsatzkonzentrationen ab etwa 0,001 Gew.-% in der Lage sind, unerwünschte Schäume zu vermeiden oder zu zerstören und gleichzeitig nach der Applikation der Systeme keine Oberflächenstörungen hervorzurufen und Luftinklusionen im Lack unterdrücken. In der Praxis müssen diese Aspekte mindestens genauso berücksichtigt werden wie eine gute Entschäumung.

Unter Oberflächenstörungen sind für den Anwender unerwünschte Eigenschaften wie beispielsweise Pinholes, Krater, Glanzverlust, Orangenschaleneffekt, Runzelbildung und Haftungsverlust im Beschichtungssystem zu verstehen. Für den Anwender ist aber auch eine entsprechende Langzeitstabilität des Entschäumers in Formulierungen von hoher Bedeutung, da oftmals Produkte wie Farben nicht umgehend, sondern mitunter erst nach längerer Lagerung verbraucht werden. Bei Lagerung unter extremen klimatischen Bedingungen (Hitze und Sonneneinstrahlung) kann mitunter die Wirksamkeit einer Entschäumerformulierung schon nach kurzer Zeit zusammenbrechen.

Dem Stand der Technik gemäße Entschäumer sind zum Beispiel Silikonöle, native Öle, Paraffin- und Mineralöle, aber auch hydrophobe Polyoxyalkylene, langkettige Alkohole sowie Mischungen dieser Produkte untereinander und Emulsionen daraus.

Entschäumer zur Entschäumung wässriger und nichtwässriger Medien, die als die Entschäumung maßgeblich beeinflussenden Wirkstoff Polyoxyalkylen Polysiloxan Polymerisate enthalten, zeigen eine besondere Wirksamkeit und Lagerstabilität. Dazu zählen sowohl die Schauminhibierung, die Entschäumung, die sehr gute Langzeitstabilität, als auch die hervorragende Verträglichkeit in wässrigen und nicht wässrigen Medien. Alle diese Eigenschaften sind für moderne Lackanwendungen von hoher Bedeutung.

Zur Verstärkung der Wirksamkeit werden häufig noch sogenannte hydrophobe Festkörper in Mengen von 0,1 bis 10 Gew.-% zugegeben, die Entnetzungsvorgänge gezielt an Schaumlamellen fördern und somit den Schaumzusammenbruch sehr wirksam unterstützen. Geeignete hydrophobe Festkörper sind entsprechende hydrophobierte oder nicht hydrophobierte Kieselsäuren, hydrophobierte oder nicht hydrophobierte Fällungskieselsäure, Metallcarboxylate wie Metallstearate, Polyolefine und natürliche oder synthetische Wachse wie Paraffinwachse, Polyolefinwachse, Amidwachse und Harnstoff oder Poly(Harnstoffe), wie z.B. in der DE 28 29 906 A1 beschrieben.

Durch Zusatz geeigneter Emulgatoren oder Schutzkolloide können solche Entschäumerformulierungen auch in wässrige Emulsionen überführt werden, die anwendungstechnisch einfacher in Lackformulierungen additiviert werden können. In der CN 101100515 A wird auf ein spezifisches Emulgierverfahren eingegangen, das ebenfalls für die Emulgierung der Polyether Polysiloxan Polymerisate verwendet werden kann.

Es ist ebenfalls bekannt, Polyoxyalkylen Polysiloxan Blockmischpolymerisate als Entschäumungsmittel zu verwenden. So ist beispielsweise in der DE 1 012602 Polyoxyalkylen Polysiloxan Polymerisate beschrieben, die eine A'-B'-A' Struktur aufweisen, wobei mit A' die Polyoxyalkylenblöcke und mit B' ein Polysiloxanblock bezeichnet ist. Diese Aktivstoffe werden der sogenannten SiOC Polyethersiloxan Entschäumer Substanzklasse zugeordnet.

In der DE 24 43 853 werden entschäumendwirkende Zubereitungen beschrieben, die neben linearen auch verzweigte Polyoxyalkylen Polysiloxan Blockcopolymere enthalten.

In der US 4,028,218 ist ein Verfahren zum Verhindern bzw. Zerstören von Schaum in wässrigen Lösungen oder Dispersionen beschrieben, wobei man sich einer ähnlichen Zubereitung, wie sie in der DE 24 43 853 beschrieben ist, bedient. Die Zubereitung unterscheidet sich im Wesentlichen durch einen zusätzlichen Gehalt an organischem Öl, welches ebenfalls entschäumend wirkt. Geeignete organische Öle sind die Ester von Alkoholen und Fettsäuren, wie z.B. pflanzliche oder tierische Öle, oder Mineralöle, Polybutadienöle oder Polypropylenglykole.

Zur Herstellung der wirtschaftlich bedeutsamen Substanzklasse der SiOC-verknüpften Polyethersiloxane, auch als Siliconpolyether oder Polysiloxan Polyether Copolymere bezeichnet, bedient man sich nach heutigem Stand der Technik mehrerer Verfahrensvarianten.

Dem Fachmann ist bekannt, dass es bei diesen SiOC-verknüpften Polyethersiloxanen um eine Produktklasse handelt, die nicht zum Verharzen neigen. Auch wenn SiOC-verknüpfte Polyethersiloxane reaktive Gruppen, wie etwa Hydroxygruppen, enthalten, so werden sie nicht zur gezielten Vernetzung eingesetzt. Sie sind nicht filmbildend im Gegensatz zu Silikonharzen.

Klassischerweise werden SiOC-verknüpfte Polyethersiloxane durch die Reaktion eines Polysiloxans mit einer am Siliciumatom gebundenen Abgangsgruppe (z.B. Halogen) und einem Alkohol oder Polyetherol gebildet. Letzterer wird üblicherweise zuvor durch Alkoxylierung von hydroxyfunktionellen Startverbindungen wie zum Beispiel Methanol, Butanol oder Glykol mit Alkylenoxiden gewonnen. Besonders Chlor als Abgangsgruppe an dem Siliciumatom ist als Ausgangsverbindungen für diesen Reaktionstyp bekannt und weit verbreitet. Chlorsiloxane und Chlorpolysiloxane sind jedoch schwierig zu handhaben, da sie äußerst reaktiv sind. Ihr Einsatz ist weiterhin mit dem Nachteil verbunden, dass der im Verlauf der Reaktion gebildete Chlorwasserstoff korrosionsbeständige Anlagen erfordert und sowohl zu technischen als auch zu ökologischen Herausforderungen führt. Darüber hinaus können in Gegenwart von Chlorpolysiloxanen und Alkoholen bzw. Polyetherolen organische Chlorverbindungen entstehen, die aus toxikologischen Gründen unerwünscht sind, so dass im Herstellungsprozess die Erfordernisse bestanden, diese zu unterdrücken und zu vernichten. Wie dem Fachmann bekannt ist es weiterhin erforderlich, bei der Reaktion eines Chlorsiloxans mit einem Alkohol oder Polyetherolen einen quantitativen Umsatz zu erreichen und zu sichern, so dass die OH-funktionelle Komponente oft in einem stöchiometrischen Überschuss bezogen auf die Chlor Abgangsgruppe der Polysiloxankomponente eingesetzt werden muss. Die Verwendung eines Polyetherüberschusses bedeutet in der Praxis, dass in den so hergestellten Polyethersiloxanen unvermeidbar größere Mengen an unreagierten Überschusspolyethern enthalten sind, die die Konzentration der wirksamen Polyethersiloxan Komponente herabsetzen und die anwendungstechnischen Eigenschaften der Polyethersiloxane beeinträchtigen. Häufig müssen zusätzlich beim oben beschriebenen Verfahren HCl-Fänger eingesetzt werden, um entsprechende quantitative Umsätze zu erzielen. Durch Einsatz HCl-Fänger entstehen große Salzmengen, deren Entfernung im industriellen Maßstab Schwierigkeiten verursachen.

Entschäumer zur Entschäumung wässriger und nichtwässriger Medien, die als die Entschäumung maßgeblich beeinflussenden Wirkstoff linear strukturierte Polyoxyalkylen Polysiloxan Blockcopolymere enthalten, zeigen eine besondere Wirksamkeit und Stabilität. Dazu zählen sowohl die Schauminhibierung, die Entschäumung, eine sehr gute Langzeitstabilität, als auch die hervorragende Verträglichkeit in wässrigen und nicht wässrigen Medien. Alle diese Faktoren sind für moderne Verfahren im Bereich Oberflächentechnik von großer Wichtigkeit.

EP 2094761 B1 beschreibt Polyoxyalkylen-Polysiloxan-Blockpolymerisate und ein Verfahren zu deren Herstellung durch Umsetzung der Alkoholkomponenten mit Chlorpolysiloxanen.

Bei den dort verwendeten Chlorpolysiloxanen handelt es sich um lineare Strukturen mit α-ω Chlorfunktionalität, die aus den Zyklen D4 und D5 in einem bestimmten Mengenverhältnis mit Dimethyldichlorsilan evtl. unter Zugabe von Wasser zur Steuerung der Kettenlänge gemischt werden und im Weiteren durch Zusatz eines sog. Äquilibrierungskatalysators, wie z.B. Schwefelsäure, Methansulfonsäure, Trifluormethansulfonsäure oder Eisen (III)-chlorid, äquilibriert werden. Die EP 2094761 B1 führt hierzu weiter aus, dass im Falle der bevorzugten Verwendung von Eisen(III)-chlorid als Katalysator zur Herstellung der linearen α-ω Dichlorsiloxanen eine vorherige Entfernung des Katalysators mit Aktivkohle zu empfehlen ist, um unerwünschte Verfärbungen durch die Anwesenheit des Eisenkatalysators auszuschließen.

Als Alternative zu diesem Verfahren bietet sich an, Alkohole oder Polyetherole mit Wasserstoffsiloxanen umzusetzen, in denen Wasserstoff direkt am Silicium gebunden ist. Unter geeigneten Bedingungen kommt es hier bei Ausbildung der SiOC-Bindung lediglich zur Abspaltung von Wasserstoff. Dieses Verfahren, bekannt als dehydrogenative Kondensation, ist ausschließlich nur in Anwesenheit eines Katalysators durchführbar. US 5,147,965 verweist auf ein Verfahren, das in der japanischen Patentveröffentlichung JPS 4819941 beschrieben wird, bei dem ein Wasserstoffsiloxan mit einem Alkohol unter Zugabe von Alkalimetallhydroxiden oder Alkalimetallalkoxiden umgesetzt wird. Nachteilig an diesem Verfahren ist, dass die Katalysatoren nach beendeter Reaktion neutralisiert werden müssen und die dabei entstehende Salzfracht zwar deutlich geringer als die des Chlorsiloxanverfahrens ist, aber dennoch aufwändig abfiltriert werden muss.

EP 3 438 158 beschreibt ein Verfahren zur Herstellung von SiOC-verknüpften Polyethersiloxanen durch Umesterung von Alkoxysiloxanen mit Polyetherolen in Gegenwart von Zinkacetylacetonat als Katalysator.

EP 0 475 440 beschreibt ein Verfahren, bei dem Wasserstoffsiloxane mit einem Alkohol unter Zugabe einer organischen Säure in Gegenwart eines Pt-Salzes umgesetzt werden. Für die Reaktion ist es unabdingbar, dass sowohl große Mengen an organischer Säure (0,1 bis 1 mol bezogen auf Alkohol), Toluol als Lösungsmittel und ein Platinsalz eingesetzt werden. Da sowohl Toluol als auch Säure im Endprodukt unerwünscht sind, müssen diese nach Reaktionsende wiederum entfernt werden. Platinsalze sind zudem nicht nur teuer, sondern aus physiologischer Sicht auch nicht unbedenklich. Gerade im Bereich der kosmetischen Industrie gibt es den Wunsch nach Platinfreien Produkten.

Ohne den Einsatz von Schwermetallen kommt das in J. Boyer, R. J. P. Corriu, R. Perz, C. Reye, J. Organomet. Chem. 1978, 157, 153-162 beschriebene Verfahren aus. Dabei werden Salze wie z.B. Kaliumtartrat, -phthalat oder -formiat als heterogene Katalysatoren eingesetzt. Die Umsetzungen erfordern allerdings den äquimolaren Einsatz der Salze bezogen auf die SiH-Einheiten und gelingen nur bei hohen Temperaturen von ca. 180°C. Sowohl die drastischen Bedingungen als auch die notwendigen großen Salzmengen machen dieses Verfahren für den technischen und industriellen Maßstab unattraktiv.

In den Patentanmeldungen DE 10 312 636 und DE 10 359 764 werden borhaltige Katalysatoren für die dehydrogenative Kondensation von Wasserstoffsiloxanen und Alkoholen eingesetzt. So attraktiv diese dehydrogenativen Verfahren zur SiOC-Verknüpfung gerade in Bezug auf die Vermeidung flüssiger und/ oder fester Nebenprodukte auch sind, so stehen sowohl der Einsatz kostspielige und toxische Katalysatoren, wie zum Beispiel Tris(pentafluorophenyl)-boran, als auch die sichere Handhabung des bei der Synthese entstehenden Wasserstoffgases einer breiten Anwendung der Technologie im industriellen Maßstab entgegen.

Der vorliegenden Erfindung liegt deshalb die Aufgabe zugrunde, ein Verfahren zur Herstellung linearer SiOC-verknüpfter Polyethersiloxane Blockpolymerisate des Strukturtyps C-B-(AB)ₐ-C1 bereitzustellen, das keine die aus dem Stand der Technik bekannten Nachteile bezüglich der Verwendung des Chlorsiloxans aufweist.

Überraschenderweise wurde nun gefunden, dass sich ein einfacher chlorfreier Zugang zu Polyoxyalkylen Polysiloxan Blockpolymerisaten der allgemeinen Formel (I)

C-B-(AB)ₐ-C1 (I)

worin bedeuten
A = ein Polyoxyalkylenblock der allgemeinen Formel (CₙH₂ₙO)_{b}-,
B = ein Polysiloxanblock der allgemeinen Formel (SiR₂ O)_{c}-,
C, C1 = gleiche oder verschiedene Alkoxypolyoxyalkylenreste der allgemeinen Formel (II)

   Z-O-[CH₂-CH(R¹)O]_{d}- (II)
Mit Z = ein Alkyl-, Alkylen-, Aryl- oder Alkylarylrest,
   oder
C, C1 = ein Alkylrest mit der Maßgabe, dass C oder C1 ein Alkoxypolyoxyalkylenrest der allgemeinen Formel (II) mit Z = Wasserstoff aufweist,
   oder
C, C1 = gleiche oder verschiedene Alkoxypolyoxyalkylenreste der allgemeinen Formel (II) mit Z = ein Wasserstoff mit der Maßgabe, dass C oder C1 ein Alkoxypolyoxyalkylenreste der allgemeinen Formel (II) mit Z = ein Alkyl-, Alkylen-, Aryl- oder Alkylarylrest aufweist,
R = gleiche oder verschiedene C₁₋₄-Alkylreste oder Phenylreste mit der Maßgabe, dass mindestens 90 % der Reste R Methylreste sind,
R¹ = gleiche oder verschiedene Wasserstoff-, C₁₋₁₂-Alkylreste oder Phenylreste,
a = 1 bis 20,
b = einen mittleren Wert von 10 bis 130,
c = 3 bis 100,
d = unabhängig voneinander in C/C1 Werte von 2 bis 20 mit der Maßgabe, dass der Mittelwert im Bereich 2 bis < 15 liegt,
n = 2 bis 12 mit einem mittleren Zahlenwert von 2,7 bis 4,0
erschließt, indem man endäquilibrierte α,ω-Diacetoxy-Polydimethylsiloxane mit einer Mischung bestehend aus mindestens einem Polyetherpolyol, bevorzugt einem Polyetherdiol, und mindestens einem Polyethermonool oder mindestens einem einwertigen Alkohol umsetzt.

Vorzugsweise wird endäquilibrierte α,ω-Diacetoxy-Polydimethylsiloxane gemäß folgender Formel (III) 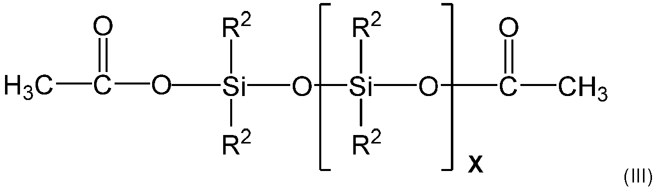 wobei
R² ein Alkylrest mit 1 bis 4 Kohlenstoffatomen oder ein Phenylrest ist, jedoch bevorzugt mehr als 90% der Reste R² Methylreste sind und
x = 2 ≤ x ≤ 250, bevorzugt 5 ≤ x ≤ 100,
besonders bevorzugt 10 ≤ x ≤ 30,
eingesetzt.

Zugänge zu Acetoxy-funktionellen Polysiloxanen sind in der Literatur beschrieben. Die bisher unveröffentlichten europäischen Patentanmeldungen mit den Anmeldeaktenzeichen EP 18172882.5, EP 18172876.7, EP 18189072.4, EP 17195510.7, EP 17204277.2, EP 18189073.2 und EP 18210035.4 widmen sich der Herstellung von trifluormethansulfonsauren, äquilibrierten Acetoxysiloxanen des linearen Strukturtyps.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Der Lehre der EP 18189073.2 beispielsweise folgend werden zyklische Polysiloxane, insbesondere umfassend D4 und/ oder D5, und/ oder Mischungen zyklisch-verzweigter Polysiloxane vom D/T-Typ unter Einsatz von Trifluormethansulfonsäure als Katalysator mit Essigsäureanhydrid und unter Zusatz von Essigsäure umgesetzt. Des Weiteren führt die EP 18189073.2 aus, dass sich sowohl Mischungen zyklischer-verzweigter Polysiloxane vom D/T-Typ, die ausschließlich aus D- und T-Einheiten aufweisenden Polysiloxanen bestehen und deren mit 29Si-NMR-Spektroskopie bestimmbarer summarischer Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und dass sie des Weiteren vorteilhafterweise zumindest 5 Gew.-% Siloxanzyklen, wie vorzugsweise Oktamethylzyklotetrasiloxan (D4), Dekamethylzyklopentasiloxan (D5) und/oder deren Mischungen enthalten, als auch Mischungen zyklischer-verzweigter, ausschließlich D- und T-Einheiten aufweisender Siloxane deren mit 29Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, besonders gut für die Herstellung endäquilibrierter, Acetoxyfunktionen aufweisender Polysiloxane eignen.

Die noch nicht offengelegte Europäische Anmeldeschrift 18210035.4 beschreibt ebenso (i) Reaktionssysteme zur Herstellung Acetoxyfunktionen tragender Polysiloxane, umfassend a) Alkoxygruppen tragende Silane und/oder Polysiloxane und/oder b) Acetoxygruppen tragende Silane und/oder Polysiloxane, c) Hydroxygruppen tragende Silane und/oder Polysiloxane c) gegebenenfalls einfache Polysiloxanzyklen und/oder DT-Zyklen, d) ein Reaktionsmedium, umfassend Essigsäureanhydrid, Perfluoralkansulfonsäure sowie vorzugsweise Essigsäure, (ii) ein Verfahren zur Herstellung linearer oder verzweigter Acetoxyfunktionen tragender Polysiloxane. Gemäß oben bezeichneter Anmeldung ist es beispielsweise möglich, zu einem terminale Acetoxygruppen tragenden, verzweigten Polysiloxan zu gelangen, indem man ein terminale Alkoxygruppen tragendes, verzweigtes Polysilikonäquilibrat ( = Voräquilibrat) als alleinigen Reaktanden mit einem Reaktionsmedium bestehend aus Essigsäureanhydrid, Trifluormethansulfonsäure und Essigsäure zur Umsetzung bringt.

Es ist bevorzugt vorstellbar, neben D- und T-Einheiten aufweisenden Poysiloxanen auch Polysiloxane mit Q-Einheiten einzusetzen, mit der Maßgabe, dass bei diesen Mischungen der Anteil an Si-Atomen stammend aus Q-Einheiten ≤ 10 Massen-% bis ≥ 0 Massenprozent-% ausmacht, bevorzugt ≤ 5 Massen-% bis ≥ 0 Massenprozent-%, wobei die Untergrenze > 0 oder = 0 Massenprozent-% sein kann, insbesondere aber > 0 Massenprozent-% ist, jeweils bezogen auf die Gesamtheit aller Si-Atome.

Die Bereitstellung von Mischungen zyklischer-verzweigter Polysiloxane vom D/T-Typ, die neben D- und T-Einheiten aufweisenden Polysiloxanen auch solche mit Q-Einheiten enthalten, ist dem Fachmann beispielsweise in Analogie zur Lehre der genannten Schriften unter Verwendung von zum Beispiel Q-Einheiten liefernden Kieselsäuresteern (Si(OR)4) ohne weiteres möglich.

Bevorzugt sind die endäquilibrierte α-ω Diacetoxy-Polydimethylsiloxane gemäß folgender Formel (III) erhältlich aus der Umsetzung von
- Alkoxygruppen tragenden Silanen und/oder Siloxanen, und/oder
- Hydroxygruppen tragenden Silanen und/oder Siloxanen, und/oder
- einfachen Siloxanzyklen und / oder DT-Zyklen,
- mit Acetanhydrid, Supersäure, insbesondere Trifluormethansulfonsäure, sowie Essigsäure.

Vorzugsweise können zur Herstellung der endäquilibrierten, α,ω-Diacetoxy-Polydimethylsiloxane gemäß Formel (III) ein Alkoxygruppen tragendes, mindestens eine T- und/ oder Q-Gruppe enthaltendes Silan und/oder Siloxan und/oder DT-Zyklen eingesetzt werden.

Gemäß einer bevorzugten Ausführungsform der Erfindung setzt man Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix bestehend aus Essigsäureanhydrid und zyklischen Polysiloxanen, umfassend D4 und/oder D5, beziehungsweise bestehend aus Essigsäureanhydrid, und Mischungen zyklisch-verzweigter Polysiloxanen vom D/T-Typ, gegebenenfalls auch mit Q-Einheiten, beziehungsweise bestehend aus zyklischen Polysiloxanen, umfassend D4 und/oder D5, und Mischungen zyklisch-verzweigter Polysiloxanen vom D/T-Typ, hinzu.

Der Katalysator Trifluormethansulfonsäure wird gemäß einer bevorzugten Ausführungsform der Erfindung in Mengen von 0,1 bis 1,0 Massenprozent, bevorzugt 0,1 bis 0,3 Massenprozent, bezogen auf die aus Essigsäureanhydrid und zyklischen Polysiloxanen, insbesondere umfassend D4 und/oder D5, und/oder zyklischen-verzweigten Polysiloxanen vom D/T-Typ, gegebenenfalls auch mit Q-Einheiten, bestehende Reaktionsmatrix, eingesetzt.

Mit dem Begriff "endäquilibriert" ist gemeint, dass das Äquilibriergleichgewicht erreicht worden, das sich bei einer Temperatur von 23°C und einem Druck von 1013,25 hPa einstellt. Als Indikator für das Erreichen des Äquilibriergleichgewichtes kann der gaschromatographisch bestimmte Gesamtzyklengehalt definiert als die Summe der D4-, D5-, D6-Gehalte bezogen auf die Siloxanmatrix und festgestellt nach der Derivatisierung der α,ω.-Diacetoxypolydimethylpolysiloxane zu den entsprechenden α,ω.-Diisopropoxypolydimethylpolysiloxanen beziehungsweise nach der Derivatisierung der verzweigten Acetoxypolysiloxane zu den entsprechenden verzweigten Isopropoxysiloxanen herangezogen werden. Der erfindungsgemäße Einsatz der Essigsäure ermöglicht hier die problemlose Unterschreitung sonst üblicher Gleichgewichtsanteile von etwa 8 Gewichtsprozenten des Gesamtzyklengehaltes bei den verzweigten Acetoxypolysiloxanen. Demzufolge entspricht es einer bevorzugten Ausführungsform, wenn Gleichgewichtsanteile des Gesamtzyklengehaltes von kleiner 8, vorzugsweise kleiner 7 Gewichtsprozent bei den verzweigten Acetoxypolysiloxanen unterschritten werden. Die Derivatisierung zu den verzweigten Isopropoxypolysiloxanen wird hierbei bewusst gewählt, um eine unter den Bedingungen der gaschromatographischen Analyse gegebenenfalls erfolgende, thermisch induzierte Rückspaltungsreaktion der α,ω.-Diacetoxypolydimethylpolysiloxane beziehungsweise der verzweigten Acetoxypolysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Vorzugsweise verwendet man für Komponente A der Formel (I) Polyetherpolyole ausgewählt aus Polyetherdiolen, Polyetherpolyolen oder Mischungen aus Polyetherdiolen und Polyetherpolyolen.

Die Polyetherpolyole werden vorzugsweise hergestellt durch Anlagerung von Alkylenoxiden, erfindungsgemäß bevorzugt Ethylenoxid, Propylenoxid, Butylenoxid, Styroloxid, vorzugsweise Mischprodukte aus mindestens zwei Monomereinheiten, insbesondere aus Ethylenoxid und Propylenoxid, an mehrwertige Starteralkohole der allgemeinen Formel

R³-[O-H]ₑ

worin
R³ = ein e-wertiger Kohlenwasserstoffrest und e = 2 bis 6, vorzugsweise 2 bis 3 sein kann, nach den im Stand der Technik bekannten Alkoxylierungsverfahren. Als Starteralkohole sind grundsätzlich alle geradkettigen oder verzweigten, mindestens zweiwertigen Alkohole verwendbar. Erfindungsgemäß bevorzugt sind zwei- und/oder dreiwertige Alkohole wie insbesondere die Ethandiol, Propandiol, Butandiol, Hexandiol, Trimethylolpropan, die allein oder als Mischung eingesetzt werden können.

Die Polyetherpolyole bestehen gemäß einer bevorzugten Ausführungsform im Wesentlichen aus Oxyethyleneinheiten oder Oxypropyleneinheiten, bevorzugt sind gemischte Oxyethylen- und Oxypropyleneinheiten mit einem Oxyethylenanteil von etwa 1 bis 70 Gewichtsprozent und 99 bis 30 Gewichtsprozent Oxypropylenanteil bezogen auf den Gesamtgehalt an Oxyalkyleneinheiten im Block.

Erfindungsgemäß bevorzugt sind Polyetherdiole, in denen Ethylenoxid (EO) und Propylenoxyd (PO) als Copolymerisate vorliegen. Besonders bevorzugt sind EO/PO-Copolymerisate, die blockartigen Aufbau besitzen und einen EO-Anteil von ca. 1 bis 30 Gew.-%, bezogen auf den Gesamtgehalt an Oxyalkyleneinheiten, enthalten.

Bevorzugt verwendet man für Komponente C, C1 der Formel (I) ein Polyethermonool und/oder einen einwertigen C1 - C18 - Alkohol ausgewählt aus Methanol, Ethanol, Propanol, Isopropanol, Butanol und Isobutanol.

Die Polyethermonoole sind grundsätzlich in der gleichen Weise herstellbar wie die Polyetherpolyole, mit der Abänderung, dass als Starteralkohole monofunktionelle Verbindungen Z¹-OH verwendet werden, worin Z¹ ein gegebenenfalls verzweigter und/oder Mehrfachbindungen enthaltender Alkyl-, Alkylen-, Alkylaryl-, Arylrest mit 1 bis 18 C-Atomen, vorzugsweise 1 bis 10 C-Atomen, sein kann.

Vorzugsweise liegt das molare Verhältnis von endäquilibrierten α,ω-Diacetoxy-Polydimethylsiloxanen zu Mischung bestehend aus mindestens einem Polyetherpolyol, bevorzugt einem Polyetherdiol, und mindestens einem Polyethermonool oder mindestens einem einwertigen Alkohol im Bereich von 1,01 bis 3,00, bevorzugt im Bereich 1,01 bis 2,00, ganz besonders bevorzugt im Bereich 1,01 bis 1,50

Bevorzugt wird die Reaktion, d.h. die Umsetzung von endäquilibrierten α-ω Diacetoxy-Polydimethylsiloxanen gemäß Formel (III) mit einer Mischung bestehend aus mindestens einem Polyetherpolyol, bevorzugt einem Polyetherdiol, und mindestens einem Polyethermonool oder mindestens einem einwertigen Alkohol, bei Temperaturen von 20°C bis 180°C, bevorzugt bei Temperaturen von 60°C bis 150°C durchgeführt.

In einer bevorzugten Ausführungsform sind die einzusetzenden Basen ausgewählt aus den Alkali- und/ oder Erdalkali-Carbonaten und/ oder -Hydrogencarbonaten und/ oder Aminen, ganz besonders bevorzugt gasförmiger Ammoniak.

Dem Fachmann bekannt, sieht auch den Einsatz einfacher fester Basen vor. Die Schwerlöslichkeit der Alkali- bzw. Erdalkali-Carbonate und/ oder -Hydrogencarbonate im Reaktionssystem berücksichtigend wählt man von diesen erfindungsgemäß höhere Überschüsse, die mindestens dem 2000-fachen stöchiometrischen Äquivalent der im α,ω-Diacetoxypolydimethylsiloxan enthaltenen Trifluormethansulfonsäure entsprechen.

Als technische Alternative zur Durchführung der SiOC-Verknüpfungsreaktion ist bekannt, dass man Puffergemische bestehend aus Natriumtrichloracetat und Trichloressigsäure beziehungsweise Natriumacetat und Trichloressigsäure, beide jeweils gelöst in Essigsäure, einsetzt. Auch hierbei wird die Menge der in den Puffergemischen enthaltenen Basen üblicherweise so bemessen, dass sie mindestens dem stöchiometrischen Äquivalent, bevorzugt dem 2 bis 3-fachen stöchiometrischen Äquivalent der im eingesetzten α,ω-Diacetoxypolydimethylsiloxan enthaltenen Trifluormethansulfonsäure entspricht.

Bezüglich der Menge der zur Lösung der Puffermischung eingesetzten Essigsäure führt die aus den nicht veröffentlichen Erfindungen aus, dass man sie vorzugsweise so wählt, dass sie ausreicht, eine klare, von festen Salzanteilen freie Pufferlösung herzustellen, die man verlustfrei in die Reaktionsmatrix dosieren kann. Darüber hinaus gehende Einsatzmengen an Essigsäure sind für das erfolgreiche Durchführen des erfindungsgemäßen Verfahrens hingegen wenig kritisch, jedoch sind große Mengen auch nicht vorteilhaft, da man sie danach wieder aus der Reaktionsmatrix entfernen muss.

Der bekannten Kondensationsneigung von Acetoxysiloxanen Rechnung tragend, sind dabei ganz besonders bevorzugt solche Basen, die auf Grund ihrer chemischen Zusammensetzung kein Wasser in das Reaktionssystem eintragen. Somit haben wasserfreie Carbonate vor Hydrogencarbonaten und Hydratwasser-freie vor Hydratwasser-enthaltenden Basen jeweils den Vorzug.

Gemäß einer bevorzugten Ausführungsform der Erfindung können als inerte Lösungsmittel Alkane, Zykloalkane, Alkylaromaten, endverschlossene Polyether und/oder Emollientester, wie den von Laurinsäure, Myristinsäure, Palmitinsäure, Stearinsäure, Ölsäure, Isostearinsäure, Ricinolsäure, und Behenilsäure hergeleiteten Estern kombiniert mit Cetyl-, Stearyl-, Isostearyl-, Oleyl-, Octyldodecyl-, Myristyl- und Behenyl-Alkohol oder Glyzerin, vorzugsweise Myristylmyristat, verwendet werden.

In einer bevorzugten Ausführungsform erfolgt die Umsetzung mit einer Mischung bestehend aus mindestens einem Polyetherpolyol, bevorzugt einem Polyetherdiol, und mindestens einem Polyethermonool oder mindestens einem einwertigen Alkohol lösemittelfrei.

Bevorzugt liegt das gewichtsmittlere Molekulargewicht jedes Polysiloxanblocks (B) zwischen 650 bis 6500 g/mol, vorzugsweise 800 bis 1500 g/mol, besonders bevorzugt bei 1000 bis 1200 g/mol.

Das nach dem erfindungsgemäßen Verfahren hergestellte Polydimethylsiloxan-Polyoxyalkylen-Blockcopolymer weist ein gewichtsmittleres Molekulargewicht von mindestens 2.000 g/mol bis ca. 160.000 g/mol, vorzugsweise 4.000 g/mol bis ca. 50.000 g/mol, insbesondere bevorzugt 5.000 g/mol bis ca. 36.000 g/mol auf. Die Ermittlung der mittleren Molekulargewichte basiert dabei auf den bekannten Methoden der GPC-Analytik.

Zur Sicherstellung erhöhter Lagerstabilität können die nach dem erfindungsgemäßen Verfahren hergestellten linearen SiOC-verknüpften Polyethersiloxane zudem noch mit kleinen Mengen organischer Amine, wie zum Beispiel N-Methylmorpholin, Triisopropanolamin oder Triethanolamin versetzt werden. Dies entspricht einer bevorzugten Ausführungsform der Erfindung.

Auch die Verwendung der erfindungsgemäßen SiOC-verknüpften, linearen Polydimethylsiloxan-Polyoxyalkylen-Blockcopolymere gemäß Formel (I), hergestellt nach dem erfindungsgemäßen Verfahren, als grenzflächenaktive Additive zur Herstellung von PU-Schaumstabilisatoren, Entschäumern, Entlüftern, Emulgatoren, Dismulgatoren und Lack- und Verlaufsadditiven stellt ein weiterer Gegenstand der Erfindung dar.

Es ist ebenfalls vorstellbar, die nach dem erfindungsgemäßen Verfahren hergestellten SiOC-verknüpften, linearen Polydimethylsiloxan-Polyoxyalkylen-Blockcopolymeren zur Herstellung von Dieselentschäumern, von Hydrophobierungsmitteln, von Polymerdispersionen, von Klebstoffen oder Dichtstoffen, von Papiertüchern; von Reinigungs- und Pflegeformulierungen für den Haushalt oder für industrielle Anwendungen, insbesondere zur Herstellung von Weichspülmitteln, von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; von Baustoffzusammensetzungen, von thermoplastischen Formkörpern einzusetzen.

Die nach dem erfindungsgemäßen Verfahren hergestellten SiOC-verknüpften, linearen Polydimethylsiloxan-Polyoxyalkylen-Blockcopolymeren können auch als Prozesshilfsmittel bei der Extrusion von Thermoplasten, als Adjuvant im Pflanzenschutz, als Additiv zur Reinigung und Pflege von harten Oberflächen, zur Oberflächenbehandlung von Fasern, Partikeln oder Flächengebilden, insbesondere zur Ausrüstung oder Imprägnierung von Textilien, oder bei der Beschichtung von Füllstoffen verwendet werden.

### Methoden

Die folgenden Beispiele dienen dem Fachmann allein zur Erläuterung dieser Erfindung und stellen keinerlei Beschränkung des beanspruchten Gegenstandes dar. Die erfindungsgemäße Bestimmung der Wassergehalte erfolgt grundsätzlich mit der Karl-Fischer-Methode in Anlehnung an DIN 51777, DGF E-III 10 und DGF C-III 13a.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [d(²⁹Si) = 0,0 ppm] gemessen. Die ²⁹Si-NMR-Spektroskopie diente in allen Beispielen der Reaktionsverfolgung.

Die Gaschromatogramme werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtzyklengehalt definiert als die Summe der D4-, D5-, D6-Gehalte bezogen auf die Siloxanmatrix und festgestellt nach der Derivatisierung der α,ω-Diacetoxypolydimethylsiloxane zu den entsprechenden α,ω-Diisopropoxy-polydimethylsiloxanen herangezogen. Die Derivatisierung zu den α,ω-Diisopropoxy-polydimethylsiloxanen wird hierbei bewusst gewählt, um eine unter den Bedingungen der gaschromatographischen Analyse gegebenenfalls erfolgende, thermisch induzierte Rückspaltungsreaktion der α,ω--Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die eingesetzten Polyetherdiole besitzen Wassergehalte von ca. 0,2 Massen-% und werden ohne weitere Vortrocknung verwendet. Eingesetztes Toluol respektive Alkylbenzol (C₁₀-C₁₃) besitzen einen Wassergehalt von 0,03 Massen-% und werden ebenfalls ohne Vortrocknung verwendet.

Die OH-Zahl der Polyetherdiole wird gemäß DGF C-V 17 a (53), beziehungsweise gemäß Ph. Eur. 2.5.3 Method A bestimmt, wobei man zunächst die Hydroxylgruppen der zu analysierenden Probe mit Essigsäureanhydrid in Gegenwart von Pyridin acetyliert und dann im Rahmen einer Differenztitration (Blindprobe, Berücksichtigung des Acetanhydridüberschusses) die freigesetzte Essigsäure als Verbrauch KOH in mg pro Gramm Polyetherdiol titriert.

### Beispiel

### a) Herstellung eines endäquilibrierten, Acetoxy-terminierten, linearen Polydimethylsiloxans

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylzyklopentasiloxan (D₅) und 24,3 g Essigsäure (3,0 Gewichtsprozent bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 4 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxy-polydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| **D₄** | **D₅** | **D₆** | **Summe (D₄ - D₆)** | **Isopropanolgehalt** |
|---|---|---|---|---|
| 4,09 % | 2,62 % | 0,86 % | 7,57 % | 4,60 % |

### b) Herstellung eines SiOC-verknüpften, linearen Polydimethylsiloxan-Polyoxyalkylen-Blockcopolymers des Strukturtyps C-B-(AB)ₐ-C1

In einem 250-ml-Vierhalskolben ausgerüstet mit KPG-Glasflügelrührer, Innenthermometer und aufgesetztem Rückflußkühler wird eine Mischung aus 67,9 g eines Polyetherdiols der mittleren Molmasse von 2671 g/ mol (nach OH-Zahl bestimmt) mit einem Massenverhältnis von Ethylenoxid zu Propylenoxid von 60 : 40 und 4,0 g eines Butanol-gestarteten Polyetherols (Propylenoxid-Anteil von 100%) mit einer Molmasse von 600 g/mol (Molmasse bestimmt nach OH-Zahl) unter Rühren mit einer Lösung von Natriumacetat und Trichloressigsäure (0,06 g Natriumacetat (0,2 Gew.-% bezogen auf das Acetoxysiloxan) und 0,21 g Trichloressigsäure (0,2% Gew.-% bezogen auf den aus der Polyethermischung und Acetoxysiloxan bestehenden Gesamtansatz)) in 5 g Essigsäure versetzt. Dann erfolgt die Zugabe von 28,0 g des trifluormethansulfonsauren α,ω-Diacetoxypolydimethylsiloxans aus Schritt a). Der Reaktionsansatz wird auf 70°C erhitzt und unter intensivem Rühren 3 Stunden bei dieser Temperatur gehalten. Der aufgesetzte Rückflusskühler wird durch eine kurze Destillationsbrücke ersetzt und der Reaktionsansatz wird bei 100°C Sumpftemperatur und einem angelegten Hilfsvakuum von 1 mbar von Flüchtigen befreit.

Nach Abkühlen auf 70°C werden unter Rühren 17 g Isopropanol hinzugegeben und man lässt den Ansatz für 3 Stunden bei dieser Temperatur reagieren und fügt anschließend 2,4 g Natriumcarbonat (2,0 Gew.-% bezogen auf den Gesamtansatz) hinzu und rührt für weitere 2 Stunden.

Nach Erkalten auf 25°C werden die festen Bestandteile mit Hilfe eines Faltenfilters abgetrennt und aus dem klaren Filtrat wird überschüssiges Isopropanol bei 70°C/ 1mbar Hilsvakuum am Rotationsverdampfer destillativ entfernt.

Isoliert wird ein farbloses Copolymer mit einer Viskosität von 1750 mPas, dessen zugehöriges 29Si-NMR-Spektrum die angestrebte Struktur (20% Isopropoxy-substituierte Si-Endgruppen bezogen auf 80% der SiOC-Bindungen die aus der Polyether-Si-Verknüpfung hervorgehen) absichert

### Zusammenfassung

Die Erfindung betrifft Verfahren zur Herstellung von SiOC-verknüpften, linearen Polydimethylsiloxan-Polyoxyalkylen-Blockcopolymeren der allgemeinen Formel (I)

C-B-(AB)ₐ-C1

durch Umsetzung von endäquilibrierten α,ω-Diacetoxy-Polydimethylsiloxanen mit einer Mischung bestehend aus mindestens einem Polyetherpolyol, bevorzugt einem Polyetherdiol, und mindestens einem Polyethermonool oder mindestens einem einwertigen Alkohol.

## Patentansprüche

1. Verfahren zur Herstellung von SiOC-verknüpften, linearen Polydimethylsiloxan-Polyoxyalkylen-Blockcopolymeren der allgemeinen Formel (I)
C-B-(AB)ₐ-C1 (I)
worin bedeuten
A = ein Polyoxyalkylenblock der allgemeinen Formel (CₙH₂ₙO)_{b}-,
B = ein Polysiloxanblock der allgemeinen Formel (SiR₂ O)_{c}-, C,C1 = gleiche oder verschiedene Alkoxypolyoxyalkylenreste der allgemeinen Formel (II)
Z-O-[CH₂-CH(R¹)O]_{d}- (II)
mit Z = ein Alkyl-, Alkylen-, Aryl- oder Alkylarylrest,
oder
C,C1 = ein Alkylrest mit der Maßgabe, dass C oder C1 ein Alkoxypolyoxyalkylenrest der allgemeinen Formel (II) mit Z = Wasserstoff aufweist,
oder
C,C1 = gleiche oder verschiedene Alkoxypolyoxyalkylenreste der allgemeinen Formel (II) mit Z = ein Wasserstoff mit der Maßgabe, dass C oder C1 ein Alkoxypolyoxyalkylenreste der allgemeinen Formel (II) mit Z = ein Alkyl-, Alkylen-, Aryl- oder Alkylarylrest aufweist,
R = gleiche oder verschiedene C_{1 - 4}-Alkylreste oder Phenylreste mit der Maßgabe, dass mindestens 90 % der Reste R Methylreste sind,
R¹ = gleiche oder verschiedene Wasserstoff-, C₁₋₁₂-Alkylreste oder Phenylreste,
a = 1 bis 20,
b = einen mittleren Wert von 10 bis 130,
c = 3 bis 100,
d = unabhängig voneinander in C/C1 Werte von 2 bis 20 mit der Maßgabe, dass der Mittelwert im Bereich 2 bis < 15 liegt,
n = 2 bis 12 mit einem mittleren Zahlenwert von 2,7 bis 4,0
**dadurch gekennzeichnet, dass**
man endäquilibrierte α,ω-Diacetoxy-Polydimethylsiloxane mit einer Mischung bestehend aus mindestens einem Polyetherpolyol, bevorzugt einem Polyetherdiol, und mindestens einem Polyethermonool oder mindestens einem einwertigen Alkohol umsetzt.

2. Verfahren nach Anspruch 1, **dadurch gekennzeichnet, dass** endäquilibrierte α,ω-Diacetoxy-Polydimethylsiloxane gemäß folgender Formel (III) 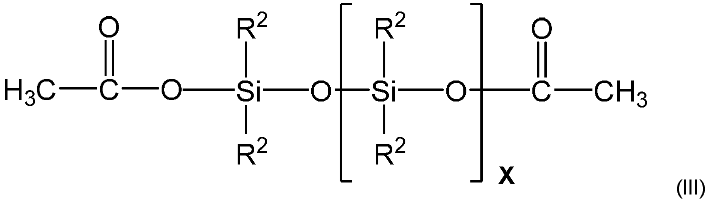 wobei
R² ein Alkylrest mit 1 bis 4 Kohlenstoffatomen oder ein Phenylrest ist, jedoch bevorzugt mehr als 90% der Reste R² Methylreste sind und
x = 2 ≤ x ≤ 250, bevorzugt 5 ≤ x ≤ 100,
besonders bevorzugt 10 ≤ x ≤ 30,
eingesetzt werden.

3. Verfahren nach Anspruch 1 oder 2, **dadurch gekennzeichnet, dass** die endäquilibrierte, α,ω-Diacetoxy-Polydimethylsiloxane gemäß Formel (III) erhältlich sind aus der Umsetzung von
• Alkoxygruppen tragenden Silanen und/oder Siloxanen, und/oder
• Hydroxygruppen tragenden Silanen und/oder Siloxanen, und/oder
• einfachen Siloxanzyklen und / oder DT-Zyklen,
• mit Acetanhydrid, Supersäure, insbesondere Trifluormethansulfonsaure, sowie Essigsäure.

4. Verfahren nach einem der Ansprüche 1 bis 3, **dadurch gekennzeichnet, dass** zur Herstellung der endäquilibrierte α,ω-Diacetoxy-Polydimethylsiloxane gemäß Formel (III) ein Alkoxygruppen tragendes, mindestens eine T- und/ oder Q-Gruppe enthaltendes Silan und/oder Siloxan und/oder DT-Zyklen eingesetzt werden.

5. Verfahren nach einem der Ansprüche 1 bis 4, **dadurch gekennzeichnet, dass** man für Komponente A der Formel (I) Polyetherpolyole ausgewählt aus Polyetherdiolen, Polyetherpolyolen oder Mischungen aus Polyetherdiolen und Polyetherpolyolen verwendet.

6. Verfahren nach einem der Ansprüche 1 bis 4, **dadurch gekennzeichnet, dass** man für Komponente C, C1 der Formel (I) ein Polyethermonool oder einen einwertigen C1 - C18 - Alkohol ausgewählt aus Methanol, Ethanol, Propanol, Isopropanol, Butanol, Isobutanol verwendet.

7. Verfahren nach einem der vorgenannten Ansprüche, **dadurch gekennzeichnet, dass** das molare Verhältnis von endäquilibrierten a,ω-Diacetoxy-Polydimethylsiloxanen zu der Mischung bestehend aus mindestens einem Polyetherpolyol, bevorzugt einem Polyetherdiol, und mindestens einem Polyethermonool oder mindestens einem einwertigen Alkohol im Bereich von 1,01 bis 3,00, bevorzugt im Bereich 1,01 bis 2,00, ganz besonders bevorzugt im Bereich 1,01 bis 1,50 liegt.

8. Verfahren nach einem der vorgenannten Ansprüche, **dadurch gekennzeichnet, dass** die Umsetzung mit einer Mischung bestehend aus mindestens einem Polyetherpolyol, bevorzugt einem Polyetherdiol, und einem Polyethermonool oder einem einwertigen Alkohol bei Temperaturen von 20°C bis 180°C, bevorzugt bei Temperaturen von 60°C bis 150°C durchgeführt wird.

9. Verfahren nach einem der vorgenannten Ansprüche, **dadurch gekennzeichnet, dass** die einzusetzenden Basen ausgewählt sind aus den Alkali- und/ oder Erdalkali-Carbonaten und/ oder -Hydrogencarbonaten und/ oder Aminen, ganz besonders bevorzugt gasförmiger Ammoniak.

10. Verfahren nach einem der vorgenannten Ansprüche, **dadurch gekennzeichnet, dass** als inerte Lösungsmittel Alkane, Zykloalkane, Alkylaromaten, endverschlossene Polyether und/oder Emollientester, wie den von Laurinsäure, Myristinsäure, Palmitinsäure, Stearinsäure, Ölsäure, Isostearinsäure, Ricinolsäure, und Behenilsäure hergeleiteten Estern kombiniert mit Cetyl-, Stearyl-, Isostearyl-, Oleyl-, Octyldodecyl-, Myristyl- und Behenyl-Alkohol oder Glyzerin, vorzugsweise Myristylmyristat, verwendet werden.

11. Verfahren nach einem der vorgenannten Ansprüche, **dadurch gekennzeichnet, dass** die Umsetzung mit einer Mischung bestehend aus mindestens einem Polyetherpolyol, bevorzugt einem Polyetherdiol, und einem Polyethermonool oder einem einwertigen Alkohol lösemittelfrei erfolgt.

12. Verfahren nach einem der vorgenannten Ansprüche, **dadurch gekennzeichnet, dass** das gewichtsmittlere Molekulargewicht, ermittelt auf den bekannten Methoden der GPC-Analytik, jedes Polysiloxanblocks (B) zwischen 650 bis 6500 g/mol, vorzugsweise 800 bis 1500 g/mol, besonders bevorzugt bei 1000 bis 1200 g/mol liegt.

13. Verfahren nach einem der vorgenannten Ansprüche, **dadurch gekennzeichnet, dass** das Polydimethylsiloxan-Polyoxyalkylen-Blockcopolymer ein gewichtsmittleres Molekulargewicht , ermittelt auf den bekannten Methoden der GPC-Analytik, von mindestens 2.000 g/mol bis ca. 160.000 g/mol, vorzugsweise 4.000 g/mol bis ca. 50.000 g/mol, insbesondere 5.000 g/mol bis ca. 36.000 g/mol aufweist.

14. Verwendung der SiOC-verknüpften, linearen Polydimethylsiloxan-Polyoxyalkylen-Blockcopolymere, hergestellt nach einem Verfahren gemäß einem der Ansprüche 1 - 13, zur Herstellung von Dieselentschäumern, von Hydrophobierungsmitteln, von Polymerdispersionen, von Klebstoffen oder Dichtstoffen, von Papiertüchern; von Reinigungs- und Pflegeformulierungen für den Haushalt oder für industrielle Anwendungen, insbesondere zur Herstellung von Weichspülmitteln, von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; von Baustoffzusammensetzungen, von thermoplastischen Formkörpern.

15. Verwendung der SiOC-verknüpften, linearen Polydimethylsiloxan-Polyoxyalkylen-Blockcopolymere, hergestellt nach einem Verfahren gemäß einem der Ansprüche 1 - 13, als Prozesshilfsmittel bei der Extrusion von Thermoplasten, als Adjuvant im Pflanzenschutz, als Additiv zur Reinigung und Pflege von harten Oberflächen, zur Oberflächenbehandlung von Fasern, Partikeln oder Flächengebilden, insbesondere zur Ausrüstung oder Imprägnierung von Textilien, oder bei der Beschichtung von Füllstoffen.

## Claims

1. Process for producing SiOC-linked, linear polydimethylsiloxane-polyoxyalkylene block copolymers of the general formula (I)
C-B-(AB)ₐ-C1 (I)
in which
A = a polyoxyalkylene block of the general formula (CₙH₂ₙO)_{b}-,
B = a polysiloxane block of the general formula (SiR₂ O)_{c}-,
C,C1 = identical or different alkoxypolyoxyalkylene radicals of the general formula (II)
Z-O-[CH₂-CH(R¹)O]_{d}- (II)
where Z = an alkyl, alkylene, aryl or alkylaryl radical,
or
C,C1 = an alkyl radical with the proviso that C or C1 possesses an alkoxypolyoxyalkylene radical of the general formula (II) where Z = hydrogen,
or
C,C1 = identical or different alkoxypolyoxyalkylene radicals of the general formula (II) where Z = a hydrogen with the proviso that C or C1 possesses an alkoxypolyoxyalkylene radical of the general formula (II) where Z = an alkyl, alkylene, aryl or alkylaryl radical,
R = identical or different C₁₋₄-alkyl radicals or phenyl radicals with the proviso that at least 90% of the radicals R are methyl radicals,
R¹ = identical or different hydrogen radicals, C₁₋₁₂-alkyl radicals or phenyl radicals,
a = 1 to 20,
b = an average value of from 10 to 130, c = 3 to 100,
d = independently of one another in C/C1 values of from 2 to 20 with the proviso that the average value is in the range from 2 to < 15,
n = 2 to 12 with an average numerical value of from 2.7 to 4.0,
**characterized in that**
end-equilibrated α,ω-diacetoxypolydimethylsiloxanes are reacted with a mixture consisting of at least one polyether polyol, preferably a polyether diol, and at least one polyether monool or at least one monohydric alcohol.

2. Process according to Claim 1, **characterized in that** end-equilibrated α,ω- diacetoxypolydimethylsiloxanes of formula (III) below 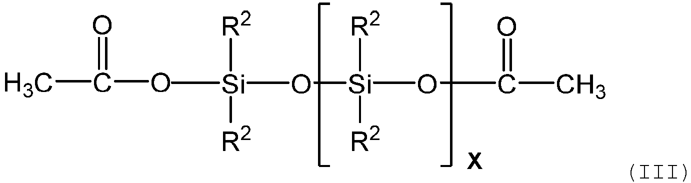 where
R² is an alkyl radical having 1 to 4 carbon atoms or a phenyl radical, but preferably more than 90% of the radicals R² are methyl radicals and
x = 2 ≤ x ≤ 250, preferably 5 ≤ x ≤ 100, particularly preferably 10 ≤ x ≤ 30,
are used.

3. Process according to Claim 1 or 2, **characterized in that** the end-equilibrated, α,ω-diacetoxypolydimethylsiloxanes of formula (III) are obtainable from the reaction of
• silanes and/or siloxanes bearing alkoxy groups, and/or
• silanes and/or siloxanes bearing hydroxy groups, and/or
• simple siloxane cycles and/or DT cycles,
• with acetic anhydride, superacid, in particular trifluoromethanesulfonic acid, and acetic acid.

4. Process according to any of Claims 1 to 3, **characterized in that**, for the production of the end-equilibrated α,ω-diacetoxypolydimethylsiloxanes of formula (III), a silane and/or siloxane bearing alkoxy groups and containing at least one T and/or Q group, and/or DT cycles are used.

5. Process according to any of Claims 1 to 4, **characterized in that**, for component A of formula (I), polyether polyols selected from polyether diols, polyether polyols or mixtures of polyether diols and polyether polyols are used.

6. Process according to any of Claims 1 to 4, **characterized in that**, for component C, C1 of formula (I), a polyether monool or a monohydric C1 - C18 alcohol selected from methanol, ethanol, propanol, isopropanol, butanol, isobutanol is used.

7. Process according to any of the preceding claims, **characterized in that** the molar ratio of end-equilibrated α,ω-diacetoxypolydimethylsiloxanes to the mixture consisting of at least one polyether polyol, preferably a polyether diol, and at least one polyether monool or at least one monohydric alcohol is in the range from 1.01 to 3.00, preferably in the range 1.01 to 2.00, very particularly preferably in the range 1.01 to 1.50.

8. Process according to any of the preceding claims, **characterized in that** the reaction with a mixture consisting of at least one polyether polyol, preferably a polyether diol, and a polyether monool or a monohydric alcohol is conducted at temperatures of 20°C to 180°C, preferably at temperatures of 60°C to 150°C.

9. Process according to any of the preceding claims, **characterized in that** the bases to be used are selected from the alkali metal and/or alkaline earth metal carbonates and/or hydrogencarbonates and/or amines, very particularly preferably gaseous ammonia.

10. Process according to any of the preceding claims, **characterized in that** inert solvents used are alkanes, cycloalkanes, alkylaromatics, end-capped polyethers and/or emollient esters, such as the esters derived from lauric acid, myristic acid, palmitic acid, stearic acid, oleic acid, isostearic acid, ricinoleic acid and behenic acid combined with cetyl, stearyl, isostearyl, oleyl, octyldodecyl, myristyl and behenyl alcohol or glycerol, preferably myristyl myristate.

11. Process according to any of the preceding claims, **characterized in that** the reaction with a mixture consisting of at least one polyether polyol, preferably a polyether diol, and a polyether monool or a monohydric alcohol is effected solventlessly.

12. Process according to any of the preceding claims, **characterized in that** the weight-average molecular weight, determined on the basis of the known methods of GPC analysis, of each polysiloxane block (B) is between 650 to 6500 g/mol, preferably 800 to 1500 g/mol, particularly preferably 1000 to 1200 g/mol.

13. Process according to any of the preceding claims, **characterized in that** the polydimethylsiloxane-polyoxyalkylene block copolymer has a weight-average molecular weight, determined on the basis of the known methods of GPC analysis, of at least 2000 g/mol to approx. 160 000 g/mol, preferably 4000 g/mol to approx. 50 000 g/mol, in particular 5000 g/mol to approx. 36 000 g/mol.

14. Use of the SiOC-linked, linear polydimethylsiloxane-polyoxyalkylene block copolymers produced by a process according to any of Claims 1 - 13 for the production of diesel defoamers, of hydrophobizing agents, of polymer dispersions, of adhesives or sealants, of paper towels; of cleaning and care formulations for the household or for industrial applications, in particular for the production of fabric softeners, of cosmetic, pharmaceutical and dermatological compositions, in particular cosmetic cleaning and care formulations, hair treatment agents and hair aftertreatment agents; of construction material compositions, of thermoplastic shaped bodies.

15. Use of the SiOC-linked, linear polydimethylsiloxane-polyoxyalkylene block copolymers produced by a process according to any of Claims 1 - 13 as processing aid in the extrusion of thermoplastics, as adjuvant in crop protection, as additive for the cleaning and care of hard surfaces, for the surface treatment of fibres, particles or fabrics, in particular for the finishing or impregnation of textiles, or in the coating of fillers.

## Revendications

1. Procédé de préparation de copolymères séquencés de polydiméthylsiloxane-polyoxyalkylène linéaires, liés par SiOC de formule générale (I)
C-B-(AB)ₐ-C1 (I)
dans laquelle
A = un bloc polyoxyalkylène de formule générale (CₙH₂ₙO)_{b}-,
B = un bloc polysiloxane de formule générale (SiR₂O)_{c}-,
C, C1 = des radicaux alcoxypolyoxyalkylène identiques ou différents de formule générale (II)
Z-O-[CH₂-CH(R¹)O]_{d}- (II)
dans laquelle
Z = un radical alkyle, alkylène, aryle ou alkylaryle ou C, C1 = un radical alkyle étant entendu que C ou C1 présente un radical alcoxypolyoxyalkylène de formule générale (II) avec Z = hydrogène, ou
C, C1 = des radicaux alcoxypolyoxyalkylène identiques ou différents de formule générale (II) avec Z = hydrogène étant entendu que C ou C1 présente un radical alcoxypolyoxyalkylène de formule générale (II) avec Z = radical alkyle, alkylène, aryle ou alkylaryle,
R = des radicaux C₁₋₄-alkyle ou des radicaux phényle identiques ou différents, étant entendu qu'au moins 90% des radicaux R sont des radicaux méthyle,
R¹ = des radicaux hydrogène, C₁₋₁₂-alkyle ou phényle identiques ou différents,
a = 1 à 20,
b = une valeur moyenne de 10 à 130,
c = 3 à 100,
d = indépendamment dans C/C1, des valeurs de 2 à 20 étant entendu que la valeur moyenne se situe dans la plage de 2 à < 15,
n = 2 à 12 avec une valeur numérique moyenne de 2,7 à 4,0,
**caractérisé en ce qu'**on transforme des α,ω-diacétoxy-polydiméthylsiloxanes complètement équilibrés avec un mélange constitué par au moins un polyétherpolyol, de préférence un polyétherdiol, et au moins un polyéthermonool ou au moins un alcool monovalent.

2. Procédé selon la revendication 1, **caractérisé en ce qu'**on utilise des α,ω-diacétoxy-polydiméthylsiloxanes complètement équilibrés selon la formule suivante (III) 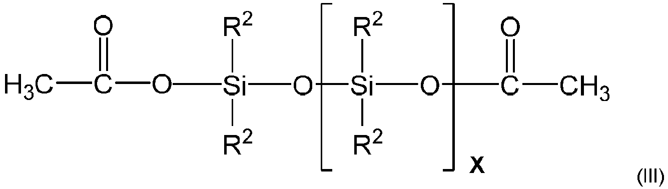 dans laquelle
R² représente un radical alkyle comprenant 1 à 4 atomes de carbone ou un radical phényle, cependant, de préférence plus de 90% des radicaux R² sont des radicaux méthyle et
x = 2 ≤ x ≤ 250, de préférence 5 ≤ x ≤ 100,
de manière particulièrement préférée 10 ≤ x ≤ 30.

3. Procédé selon la revendication 1 ou 2, **caractérisé en ce que** les α,ω-diacétoxy-polydiméthylsiloxanes complètement équilibrés selon la formule (III) peuvent être obtenus par transformation
- de silanes et/ou de siloxanes portant des groupes alcoxy et/ou
- de silanes et/ou de siloxanes portant des groupes hydroxy et/ou
- de cycles siloxane simples et/ou de cycles DT,
- avec de l'anhydride acétique, un superacide, en particulier l'acide trifluorométhanesulfonique ainsi que l'acide acétique.

4. Procédé selon l'une des revendications 1 à 3, **caractérisé en ce qu'**on utilise, pour la préparation des α,ω-diacétoxy-polydiméthylsiloxanes complètement équilibrés selon la formule (III), un silane et/ou un siloxane portant des groupes alcoxy, contenant au moins un groupe T et/ou Q et/ou des cycles DT.

5. Procédé selon l'une des revendications 1 à 4, **caractérisé en ce qu'**on utilise, pour le composant A de formule (I), des polyétherpolyols choisis parmi les polyétherdiols, les polyétherpolyols ou les mélanges de polyétherdiols et de polyétherpolyols.

6. Procédé selon l'une des revendications 1 à 4, **caractérisé en ce qu'**on utilise, pour le composant C, C1 de formule (I), un polyéthermonool ou un C1-C18-alcool monovalent choisi parmi le méthanol, l'éthanol, le propanol, l'isopropanol, le butanol, l'isobutanol.

7. Procédé selon l'une des revendications susmentionnées, **caractérisé en ce que** le rapport molaire de α,ω-diacétoxy-polydiméthylsiloxanes complètement équilibrés au mélange constitué par au moins un polyétherpolyol, de préférence un polyétherdiol, et au moins un polyéthermonool ou au moins un alcool monovalent se situe dans la plage de 1,01 à 3,00, de préférence dans la plage de 1,01 à 2,00, de manière tout particulièrement préférée dans la plage de 1,01 à 1,50.

8. Procédé selon l'une des revendications susmentionnées, caractérisé en ce la transformation avec un mélange constitué par au moins un polyétherpolyol, de préférence un polyétherdiol, et un polyéthermonool ou un alcool monovalent est effectuée à des températures de 20°C à 180°C, de préférence à des températures de 60°C à 150°C.

9. Procédé selon l'une des revendications susmentionnées, **caractérisé en ce que** les bases à utiliser sont choisies parmi les carbonates et/ou les hydrogénocarbonates de métal alcalin et/ou alcalino-terreux et/ou les amines, de manière tout particulièrement préférée l'ammoniac gazeux.

10. Procédé selon l'une des revendications susmentionnées, **caractérisé en ce qu'**on utilise, comme solvant inerte, des alcanes, des cycloalcanes, des alkylaromatiques, des polyéthers à terminaisons fermés et/ou des esters émollients, tels que les esters dérivés de l'acide laurique, myristique, palmitique, stéarique, oléique, isostéarique, ricinoléique et béhénylique, combinés avec l'alcool cétylique, stéarylique, isostéarylique, oléylique, octyldodécylique, myristylique et béhénylique ou le glycérol, de préférence le myristate de myristyle.

11. Procédé selon l'une des revendications susmentionnées, caractérisé en ce la transformation avec un mélange constitué par au moins un polyétherpolyol, de préférence un polyétherdiol, et un polyéthermonool ou un alcool a lieu sans solvant.

12. Procédé selon l'une des revendications susmentionnées, **caractérisé en ce que** le poids moléculaire moyen en poids, déterminé sur base des méthodes connues de l'analytique par CPG, de chaque bloc polysiloxane (B) se situe entre 650 à 6500 g/mole, de préférence à 800 jusqu'à 1500 g/mole, de manière particulièrement préférée à 1000 jusqu'à 1200 g/mole.

13. Procédé selon l'une des revendications susmentionnées, **caractérisé en ce que** le copolymère séquencé de polydiméthylsiloxane-polyoxyalkylène présente un poids moléculaire moyen en nombre, déterminé sur base des méthodes connues de l'analytique par CPG, d'au moins 2000 g/mole à environ 160.000 g/mole, de préférence de 4000 g/mole à environ 50.000 g/mole, en particulier de 5000 g/mole à environ 36.000 g/mole.

14. Utilisation des copolymères séquencés de polydiméthylsiloxane-polyoxyalkylène linéaires, liés par SiOC, préparés selon un procédé selon l'une des revendication 1-13 pour la préparation d'antimousses de diesel, d'agents rendant hydrophobe, de dispersions polymères, d'adhésifs ou de matériaux d'étanchéité, de lingettes en papier ; de formulations de nettoyage et d'entretien pour le ménage ou pour des applications industrielles, en particulier pour la préparation d'adoucissants, de compositions cosmétiques, pharmaceutiques et dermatologiques, en particulier de formulations de nettoyage et de soin cosmétiques, d'agents de traitement des cheveux et d'agents de conditionnement des cheveux ; de compositions de matériau de construction, de corps moulés thermoplastiques.

15. Utilisation des copolymères séquencés de polydiméthylsiloxane-polyoxyalkylène linéaires, liés par SiOC, préparés selon un procédé selon l'une des revendications 1-13, comme adjuvant de procédé lors de l'extrusion de thermoplastiques, comme adjuvant dans la phytoprotection, comme additif pour le nettoyage et l'entretien de surfaces dures, pour le traitement de surface de fibres, de particules ou de structures planes, en particulier pour l'apprêt ou l'imprégnation de textiles ou lors de l'enrobage de charges.
